# EUROPEAN PATENT APPLICATION

(11) **EP 3 352 128 A1**
(43) Date of publication of application: **25.07.2018**
(21) Application number: 15904174.8
(22) Date of filing: 18.09.2015
(51) Int. Cl.: G06Q 30/06, G06Q 50/10

(54) **SERVICE PROVIDING PLACE INFORMATION BASED SERVICE PROVIDING METHOD**

(71) Applicant: YAP Company, Seoul 03143 (KR)
(72) Inventor: OH, Jun-Ho, Seoul 06524 (KR); CHEONG, Hoe-Seok, Seoul 06524 (KR); JO, Young-Jin, Seoul 06524 (KR)
(74) Representative: Schaad, Balass, Menzl & Partner AG
(86) International application number: PCT/KR2015/009805
(87) International publication number: WO 2017/047844

(57) **Abstract**

Disclosed is a service providing place information based service providing method, the method including: receiving, by a service server, service order information input from a mobile terminal; processing, by the service server, payment according to the service order information; receiving, by the service server, service providing place information from the mobile terminal that has received a signal having the service providing place information within a specified time to identify the service providing place information; transmitting, by the service server, the service order information to a service providing place terminal and instructing the service providing place terminal to provide relevant service according to the received service order information and the received service providing place information; and transmitting, by the service server, the service order information to the service providing place terminal and reporting to the mobile terminal that an instruction to provide the relevant service has been conducted.

## Description

### Technical Field

The present invention relates to a service providing place information based service providing method. More particularly, the present invention relates to a service providing place information based service providing method, wherein a service server processes payment according to service order information input from a mobile terminal, receives service providing place information from the mobile terminal that has entered a particular service providing place within a specified time and has received a signal having the service providing place information to identify the service providing place information, and transmits the service order information to a service providing place terminal and instructs the service providing place terminal to provide relevant service according to the service order information and the service providing place information, whereby the relevant service is provided to a user.

### Background Art

In conventional self-service shops, such as fast food restaurants, coffee shops, etc., service is provided in a way that a user moves to a counter to order food, receives a notification device, etc., waits for notification while seated, and moves to get food after receiving the notification.

As described above, when food is ordered at the counter, numerous users have to wait for a long time to order food, which is inconvenient to the users. Also, when numerous users wait in a line, it is difficult to spend sufficient time to choose the menu, etc. and to request a special order. From the position of an employer, increasing the number of employees at the counter to shorten the ordering time results in additional payroll costs.

In order to solve these problems, a method of ordering food using Bluetooth is disclosed in Korean Patent Application Publication No. 10-2004-0023638 "title: an intelligent wireless ordering method and system using Bluetooth".

The Korean Patent Application Publication relates to a method of ordering food and providing food information using Bluetooth wherein a Bluetooth wireless communication device of a customer and a Bluetooth application server in a shop providing service to the wireless communication device are used, the method including: storing, by the Bluetooth application server in the shop, preset food order information and food-related information including at least one selected from a group of food origin or food characteristic information for each food, cooking information, a food advertisement or coupon in a food information D/B (database); recognizing, by the Bluetooth application server in the shop, a wireless communication device of the customer, extracting the food order information stored in the food information D/B (database), and providing the extracted food order information to the wireless communication device through a Bluetooth communication protocol when the customer visits the shop; selecting, by the wireless communication device, food to be ordered based on the food order information received from the Bluetooth application server, and providing the selected order information to the Bluetooth application server through the Bluetooth communication protocol; extracting, by the application server, the food-related information from the food information D/B (database) based on the food order information received from the wireless communication device, the food-related information including at least one selected from a group of the food origin or food characteristic information on the food ordered by the customer, the cooking information, the food advertisement or coupon; and providing, by the application server, the extracted food-related information to the wireless communication device of the customer through the Bluetooth communication protocol.

However, the method of ordering food using Bluetooth requires each shop to be constructed with a server, and thus implementation of the server is costly. Particularly, in the case of a shop in the form of chain store, it is necessary to build a system for each shop.

Also, since food information and food order information are transmitted between the wireless communication device of the customer and the Bluetooth application server using Bluetooth, which is developed for near field communication between devices, it is difficult to process a large amount of data. Also, since a communication support rate is narrow, it is necessary to install multiple piconets, resulting in additional installation costs. Furthermore, it is difficult to process a large amount of data, such that speed is significantly lowered in processing various advertisements and events with multimedia.

Also, in a conventional reservation method, it is necessary to visit the shop in accordance with the providing time of service, such as food, etc. When the user cannot visit on time, the service cannot be provided to the user. When the user is late to the providing time of service, such as food, drink, coffee, etc., the food or coffee may become cold and may lose its taste. In the case of a cold drink with ice, ice melts and the user is unable to have a cool drink.

### Disclosure

### Technical Problem

Accordingly, the present invention has been made keeping in mind the above problems occurring in the related art, and an object of the present invention is to provide a service providing place information based service providing method that: enables a user to order and pay before visiting a shop without waiting to order and pay for food, drink, coffee, etc.; can transmit service providing place information, such as shop information, etc., to a service server through a mobile terminal when the user visits the shop; and enables the service server to instruct a shop terminal to provide service, whereby the user can wait for food, drink, coffee, etc. while sitting in the service providing place, such as the shop, etc. Also, an object of the present invention is to provide a service providing place information based service providing method enabling that when a user enters a shop, food, drink, or coffee starts to be made, whereby the user can receive the best service.

### Technical Solution

In order to accomplish the above object, the present invention provides a service providing place information based service providing method, the method including: receiving, by a service server, service order information input from a mobile terminal; processing, by the service server, payment according to the service order information; receiving, by the service server, service providing place information from the mobile terminal that has received a signal having the service providing place information within a specified time to identify the service providing place information; transmitting, by the service server, the service order information to a service providing place terminal and instructing the service providing place terminal to provide relevant service according to the received service order information and the received service providing place information; and transmitting, by the service server, the service order information to the service providing place terminal and reporting to the mobile terminal that an instruction to provide the relevant service has been conducted.

In order to accomplish the above object, the present invention provides a service providing place information based service providing method, the method including: receiving, by a service server, service providing place information from a mobile terminal that has received a signal having the service providing place information to identify the service providing place information; receiving, by the service server, service order information input from the mobile terminal; processing, by the service server, payment according to the service order information; transmitting, by the service server, the service order information to a service providing place terminal and instructing the service providing place terminal to provide relevant service according to the received service providing place information and the received service order information; and transmitting, by the service server, the service order information to the service providing place terminal and reporting to the mobile terminal that an instruction to provide the relevant service has been conducted.

### Advantageous Effects

According to the present invention, a user can input service order information desired to be received and payment is processed using a mobile terminal in advance, and when the user visits a service providing place within a specified time, relevant service is provided at the service providing place according to the service order information and service providing place information, whereby the user can wait for the service while sitting without waiting to order and pay for the service, such as food, drink, coffee, etc., and thus inconvenience of the user can be reduced. Also, when the user does not visit the service providing place, the final order is not fulfilled and physical and time loss do not occur. When the user does not visit the service providing place and a specified time has elapsed, the service server automatically cancels service order information and payment, whereby it is possible to prevent the user from suffering unexpected loss.

Also, when the user visits the service providing place before placing an order, the user can input service order information desired to be received and payment is processed using the mobile terminal while sitting without waiting to order and pay for food, drink, coffee, etc., and relevant service is provided at the service providing place according to the service providing place information and service order information, thereby reducing inconvenience of the user.

In inputting order information, a special order can be placed in addition to a usual order of the service providing place. That is, the special order can be placed according to a user personal taste such that user's satisfaction can increase. In the position of the service providing place, an employee is not required in the order and payment processes such that payroll can be saved.

Additional installations are unnecessary other than a signal generator generating a signal having service providing place information installed at each shop. In some cases, an existing speaker already installed at the service providing place can be used, and thus cost can be saved. Also, an existing wireless communication network can be used, order and payment can be processed a single integrated service server, and it is unnecessary to construct an additional server for each shop, whereby cost and time for constructing a system can be saved.

### Description of Drawings

FIG. 1 is a configuration diagram illustrating a service providing place information based service providing method where service order information is received, and then service providing place information is received according to an embodiment of the present invention.
FIG. 2 is a configuration diagram illustrating a service providing place information based service providing method where service providing place information is received, and then service order information is received according to an embodiment of the present invention.

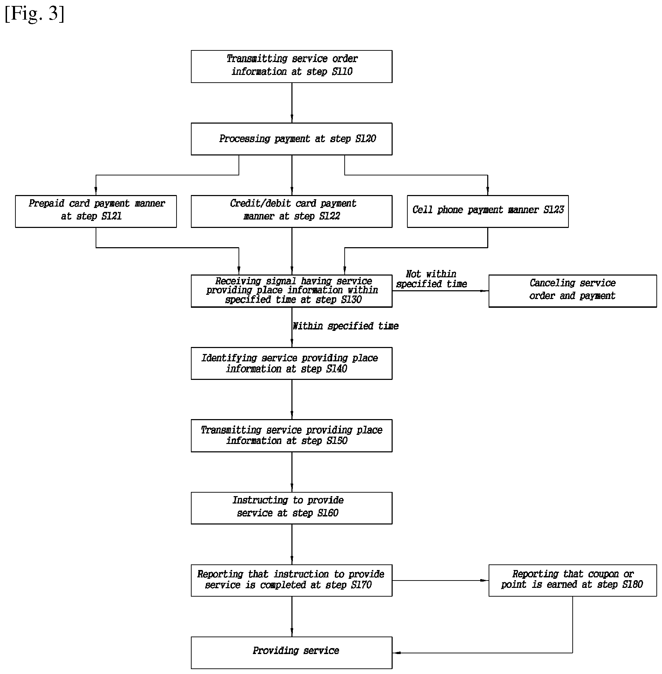

FIG. 3 is a flowchart illustrating a service providing place information based service providing method where service order information is received, and then service providing place information is received according to an embodiment of the present invention.

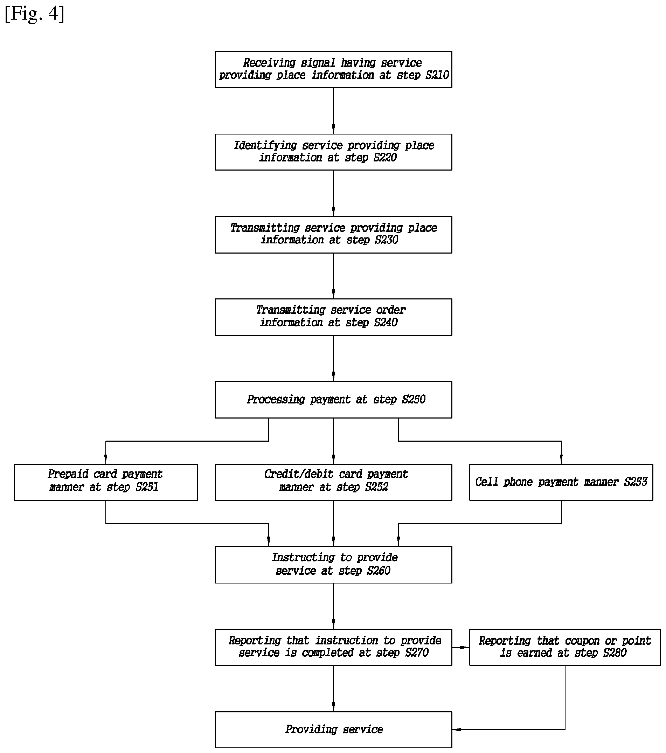

FIG. 4 is a flowchart illustrating a service providing place information based service providing method where service providing place information is received, and then service order information is received according to an embodiment of the present invention.

### Best Mode

Hereinafter, the present invention will be described in detail with reference to the accompanying drawings. The same reference numerals throughout the drawings denote the same elements. In the following description of the present invention, detailed descriptions of known functions and components incorporated herein will be omitted when it may make the subject matter of the present invention unclear.

Terms used herein are used only in order to describe specific embodiments rather than limiting the present invention. As used herein, the singular forms are intended to include the plural forms as well, unless the context clearly indicates otherwise. It will be further understood that the terms "comprises" or "have" used in this specification, specify the presence of stated features, numerals, processes, operations, components, parts, or a combination thereof, but do not preclude the presence or addition of one or more other features, numerals, processes, operations, components, parts, or a combination thereof.

According to an embodiment of the present invention, service is a concept that includes both tangible and intangible services. Tangible service, such as food, drink, coffee, manufactured goods, etc., as well as intangible service, such as cooking, serving drink or coffee, beauty care, etc. are included. Particularly, the service, such as food and coffee that needs to be consumed immediately after being prepared because taste, flavor, and smell are degraded after a certain period of time has elapsed since being cooked, may be preferred.

A service providing place includes all places where tangible and intangible services are provided, such as restaurants, coffee shops, convenience stores, clothes shops, beauty salons, department stores, supermarkets, etc. Particularly, restaurants or coffee shops may be preferred.

A mobile terminal 10 may include a cell phone, a personal PC, a business PC, a merchant PC, a tablet PC, etc. The mobile terminal 10 may contain a receiver that can receive a signal having service providing place information. As examples of the receiver, there are a microphone capable of receiving high-frequency waves or ultrasound, a slave device capable of receiving radio waves of Bluetooth technology, and any other devices capable of receiving signals having service providing place information.

The mobile terminal 10 may provided with an application installed therein. The application is configured to receive a signal having service providing place information to identify the service providing place information and to display service available at the service providing place on the mobile terminal 10, and transmit the service providing place information to a service server. A user may download the application from the service server 20, etc. and may install the application in the mobile terminal 10 in advance. After installation, the user may enter user information, such as an ID, a password, etc., and may join as a member. Also, a prepaid card purchased from an offline service providing place or an online service providing server may be registered in the application in advance. In this case, registration is accomplished entering prepaid card information, such as a prepaid card number, a pin number, a password, etc. The prepaid card is registered in advance such that payment can be processed in a prepaid card payment manner at steps S121 and S251 described below.

Also, credit/debit card information or user information can be input in advance, such that payment can be processed in a credit/debit card payment manner at steps S122 and S252 or in a cell phone payment manner at steps S123 and S253 described below.

By the application of the mobile terminal 10, the type, price, etc. of the service available at the service providing place that is identified from the received signal having the service providing place information may be displayed on a display of the user mobile terminal, and the user may enter service order information. Also, the user may add a special order in addition to a usual service order. For example, when ordering coffee, the user may place a special order to make coffee strong or weak according to taste. The special order may be stored, and may be reused when placing the same order later. The special order may be included in the type of the service available at the service providing place that is indentified from the received signal having the service providing place information, and may be displayed on the display of the user mobile terminal.

The user may select whether to automatically receive the signal at the service providing place or to receive the signal after activating the receiver. When automatically receiving the signal, the application is executed and the service providing place information is identified. When the user manually activates the receiver, the signal is received after manually activating the receiver and the application is executed to identify the service providing place information. The user may select the automatic manner or the manual manner in consideration of both convenient of the mobile terminal 10 and battery efficiency.

A signal generator 40 generating the signal having the service providing place information may be any device capable of generating a signal. For example, in the case of ultrasound or high-frequency waves, the signal generator serves as a speaker, and in the case of Bluetooth technology, the signal generator serves as a master device. In the case of Bluetooth technology, the signal generator 40 generating the signal having the service providing place information serves as a master device, and the mobile terminal 10 receiving the signal serves as a slave device. The devices are connected such that a piconet is formed. The signal generator 40 generates the signal having the service providing place information continuously during a service available time. Within the service available time, when the user carrying the mobile terminal 10 capable of receiving the signal having the service providing place information enters the service providing place, the mobile terminal 10 receives the signal having the service providing place information.

When the user first enters a particular service providing place, a pairing process is required between the master device installed at the service providing place and the mobile terminal 10 of the user serving as the slave device. The master device at the particular service providing place may search for the mobile terminal 10 of the user using a device addition function and pairing may be performed therebetween. In this case, Bluetooth of the mobile terminal 10 of the user is in the middle of operation. In some cases, a password is necessary for pairing. The password is a letter or a number assigned to the mobile terminal 10 of the user serving as the slave device. After the pairing process, when the user carrying the mobile terminal 10 enters a particular service providing place while Bluetooth of the mobile terminal 10 operates, the master device at the particular service providing place is automatically connected to the mobile terminal 10 of the user and the mobile terminal 10 of the user receives a Bluetooth signal having the service providing place information from the master device at the particular shop.

The signal may be anything capable of having service providing place information, such as sound waves, ultrasound, high-frequency waves, radio waves, etc. Preferably, the signal is ultrasound, high-frequency waves, or radio waves outside a human audible range. Ultrasound or high-frequency waves may have frequencies ranging 18000 to 20000 Hz. Radio waves may have frequencies ranging 2400 to 2500 MHz used in Bluetooth technology. Particularly, it is preferred that the signal is propagated within a particular range such that the signal can be received only within the service providing place.

When using ultrasound or high-frequency waves with frequencies ranging 18000 to 20000 Hz, the signal is received only within the particular service providing place, whereby accuracy in receiving the signal can be enhanced. When frequencies of ultrasound or high-frequency waves exceed 20000 Hz, there are problems that the signal is received outside the service providing place and accuracy in receiving ultrasound or high frequency waves by the microphone of the mobile terminal entering the service providing place is low. Also, when frequencies of ultrasound or high-frequency waves are less than 18000 Hz, the frequencies are in the human audible range and the user may feel uncomfortable. When frequencies of ultrasound or high-frequency waves exceed 20000 Hz, problems occur in generating an ultrasonic or high-frequency signal by a general speaker and receiving the ultrasonic or high-frequency signal through a general microphone.

The ultrasonic or high-frequency signal having the service providing place information may be formed in an ultrasonic pattern or a high-frequency pattern where occurrence and pause of ultrasound or high frequency waves alternate. The ultrasonic or high-frequency signal having the service providing place information may be configured to repeat occurrence of the ultrasonic or high-frequency signal at regular intervals after the signal initially occurs. The microphone of the mobile terminal 10 of the user receives or recognizes the frequencies of the occurred ultrasound or high frequency waves and the occurrence number thereof. The frequencies of the occurred ultrasound or high frequency waves and the occurrence number thereof may be combined to identify the service providing place information by the application of the mobile terminal 10. The minimum unit of the ultrasonic or high-frequency signal having the service providing place information may consist of signal occurrence, signal pause, and signal occurrence, i.e., two signal occurrences and one signal pause. When the number of signal occurrences is N, the number of signal pauses is N-1 and N has a value of two or more. The ultrasonic or high-frequency signal having the service providing place information may be configured to repeat in units of a set as having three signal occurrences as one set.

It is preferred that an ultrasonic or high-frequency signal generator generates the ultrasonic or high-frequency signal having the service providing place information in an ultrasonic or high-frequency pattern where occurrence and pause of the ultrasonic or high-frequency signal alternate and the number of ultrasonic or high-frequency signal occurrences is in a range of 3 to 15. When the number of signal occurrences is two, the number of cases for the service providing place information in the ultrasonic or high-frequency signal by combining the frequencies of the signal and the occurrence number of the signals is limited, and thus there may be a problem in signal diversity. When the number of signal occurrences is three or more, the first signal occurrence wirelessly transmitted may be used as a signal for starting receiving the ultrasonic or high-frequency signal having the service providing place information and the last signal occurrence may be used as a signal for terminating receiving the ultrasonic or high-frequency signal having the service providing place information, whereby accuracy in receiving the signal can be enhanced. In this case, only the middle signal occurrence may be used as the service providing place information such that accuracy in a process of identifying the service providing place can be enhanced. When the number of signal occurrences exceeds 15, the overall time for wireless transmission by the ultrasonic or high-frequency signal pattern is long and possibility of interference caused by ambient noise, etc. may increase. Also, there may be a problem that the user of the service providing place information based service providing method using the ultrasonic or high-frequency signal pattern waits for a long time to receive the signal.

It is preferred that the pause time in the ultrasonic or high-frequency signal pattern where occurrence and pause of the signal having the service providing place information alternate in a range of 0.1 second to five seconds. When the pause time of the ultrasonic or high-frequency signal is less than 0.1 second, the interval between signal occurrences is too short and it is difficult to identify the occurrence number of the ultrasonic or high-frequency signals. When the receiver of the mobile terminal 10 identifies the ultrasonic or high-frequency signal wirelessly transmitted, a signal occurring two times may be mistakenly identified as a signal occurring one time. Also, the error may occur in the service providing place information which is a combination of frequencies of the ultrasonic or high-frequency signal and the occurrence number of the signals. Therefore, service providing based on the service providing place information using the ultrasonic or high-frequency signal pattern may fail and the user may not be provided with the desired service. When the pause time of the ultrasonic or high-frequency signal exceeds five seconds, the overall time for wireless transmission of the signal by the ultrasonic or high-frequency signal pattern is long and possibility of interference caused by ambient noise, etc. may increase. Also, there may be a problem that the user of the service providing place information based service providing method using the ultrasonic or high-frequency signal pattern waits for a long time to receive the ultrasonic or high-frequency signal.

The service server 20 is connected to multiple service providing place terminals 30 in wired or wireless communication, and is connected to the mobile terminal 10 in wired or wireless communication. The service server 20 receives the service order information and the service providing place information from the mobile terminal 10 through a wired or wireless information communication network, and reports to the mobile terminal 10 completion of an instruction to provide the service and coupon or point earning. The service server 20 transmits the instruction to provide the service to a service providing place terminal 30 through the wired or wireless information communication network according to the service order information and the service providing place information, and the user receives the service at the service providing place.

The service server 20 is connected to a credit/debit card company server or a mobile communications company server in wired or wireless communication for the payment process. The service server 20 may process payment according to the service order information in the credit/debit card payment manner at step S122 with the credit/debit card company server through the wired or wireless information communication network. Also, the service server 20 may process payment according to the service order information in the cell phone payment manner at step S123 with the mobile communications company server through the wired or wireless information communication network.

The service providing place terminal 30 may be any device capable of receiving the instruction to provide the service from the service server 20. According to the service providing place information, when the instruction to provide the service is transmitted to the service providing place terminal 30 and employees at the service providing place recognize the instruction, the service according to the service order information is provided to the user. The service providing place terminal 30 is a concept including a point of sale (POS) terminal.

According to an embodiment of the present invention, there is provided a service providing place information based service providing method including: receiving, by a service server, service order information input from a mobile terminal, the mobile terminal being provided with an application installed therein displaying service information and receiving a high-frequency signal having service providing place information to identify the service providing place information and being provided with a microphone receiving high-frequency waves having the service providing place information; processing, by the service server, payment according to the service order information; receiving, by the service server, the service providing place information from the mobile terminal that has entered a service providing place within a specified time and has received the high-frequency signal having the service providing place information from a speaker installed at the service providing place to identify the service providing place information; transmitting, by the service server, the service order information to a service providing place terminal and instructing the service providing place terminal to provide relevant service according to the received service order information and the received service providing place information; and transmitting, by the service server, the service order information to the service providing place terminal and reporting to the mobile terminal that an instruction to provide the relevant service has been conducted.

According to an embodiment of the present invention, there is provided a service providing place information based service providing method including: receiving, by a service server, service providing place information from a mobile terminal, wherein the mobile terminal is provided with an application installed therein displaying service information and receiving a high-frequency signal having the service providing place information to identify the service providing place information, is provided with a microphone receiving high-frequency waves having the service providing place information, and has entered a service providing place and has received the high-frequency signal having the service providing place information from a speaker installed at the service providing place to identify the service providing place information; receiving, by the service server, service order information input from the mobile terminal; processing, by the service server, payment according to the service order information; transmitting, by the service server, the service order information to a service providing place terminal and instructing the service providing place terminal to provide relevant service according to the received service providing place information and the received service order information; and transmitting, by the service server, the service order information to the service providing place terminal and reporting to the mobile terminal that an instruction to provide the relevant service has been conducted.

According to an embodiment of the present invention, although an order and payment for food, drink, coffee, etc. are processed in advance, the service order is transmitted only to the service server and the final order is not filled by the shop. Only when the application installed in the mobile terminal receives the signal having the service providing place information and identifies the service providing place information in consequence of a service order from the customer and a visit to the shop, the service order information is transmitted to a service providing place terminal specified by the service server and the final order is filled. According to the present invention, it is unnecessary to place an order in advance specifying a particular shop and an expected arrival time. When the customer does not visit the particular shop, the service order is not reported to a management server of the particular shop and the final order is not filled. In the case where the final order is filled by the particular shop before the customer visits the particular shop, when the customer who placed the final order arrives after the specified expected time, providing of goods and service is unable to be smoothly processed. When the customer does not visit the particular shop, goods and service prepared at the particular shop are useless, resulting in unexpected waste of time and material. According to the present invention, it is unnecessary to specify the particular shop and the expected arrival time in advance, and thus psychological burden of the customer can reduced. Also, even though the customer orders the service in advance, the customer can visit a desired shop at a desired time and can receive the desired service quickly without any additional order. According to the present invention, even when the customer visits a shop without an order in advance, the application installed in the mobile terminal automatically receives the signal having the service providing place information and identifies the service providing place information. Thus, when the service information is displayed, the customer can order the service while sitting without waiting for ordering, whereby the customer can receive the desired service quickly. According to the present invention, the final order is filled when two conditions are satisfied: receiving of the signal having the service providing place information and inputting of the service order information in consequence of entering the shop. Accordingly, it is unnecessary to specify the shop and the expected arrival time, and providing of the service is smoothly processed without arrival at the particular shop at the expected arrival time. Also, even when the customer does not visit the particular shop to which the order is placed, unexpected waste of time and material does not occur.

In the present invention, only when the service order information and payment input to the mobile terminal are transmitted only to the service server and the customer arrives at the desired shop at the desired time such that the mobile terminal receives the signal having the service providing place information and the service providing place information is identified and transmitted to the service server, the service server can transmit the service order information to the shop terminal and preparation to provide the service starts and the service can be provided after the customer arrives at the shop.

According to an embodiment of the present invention, there is provided a service providing place information based service providing method including: receiving, by a service server, service order information input from a mobile terminal being provided win an application installed therein displaying service information and receiving an ultrasonic signal with frequencies ranging 18000 to 20000 Hz having service providing place information to identify the service providing place information and being provided with a microphone receiving ultrasound with frequencies ranging 18000 to 20000 Hz having the service providing place information; processing, by the service server, payment according to the service order information; receiving, by the service server, the service providing place information from the mobile terminal that has entered a service providing place within a specified time and has received the ultrasonic signal with frequencies ranging 18000 to 20000 Hz having the service providing place information from a speaker installed at the service providing place to identify the service providing place information; transmitting, by the service server, the service order information to a service providing place terminal and instructing the service providing place terminal to provide relevant service according to the received service order information and the received service providing place information; and transmitting, by the service server, the service order information to the service providing place terminal and reporting to the mobile terminal that an instruction to provide the relevant service has been conducted.

According to an embodiment of the present invention, there is provided a service providing place information based service providing method including: receiving, by a service server, service providing place information from a mobile terminal, wherein the mobile terminal is provided with an application installed therein displaying service information and receiving an ultrasonic single with frequencies ranging 18000 to 20000 Hz having the service providing place information to identify the service providing place information, is provided with a microphone receiving ultrasound with frequencies ranging 18000 to 20000 Hz having the service providing place information, and has entered a service providing place and has received the ultrasonic signal with frequencies ranging 18000 to 20000 Hz having the service providing place information from a speaker installed at the service providing place to identify the service providing place information; receiving, by the service server, service order information input from the mobile terminal; processing, by the service server, payment according to the service order information; transmitting, by the service server, the service order information to a service providing place terminal and instructing the service providing place terminal to provide relevant service according to the received service providing place information and the received service order information; and transmitting, by the service server, the service order information to the service providing place terminal and reporting to the mobile terminal that an instruction to provide the relevant service has been conducted.

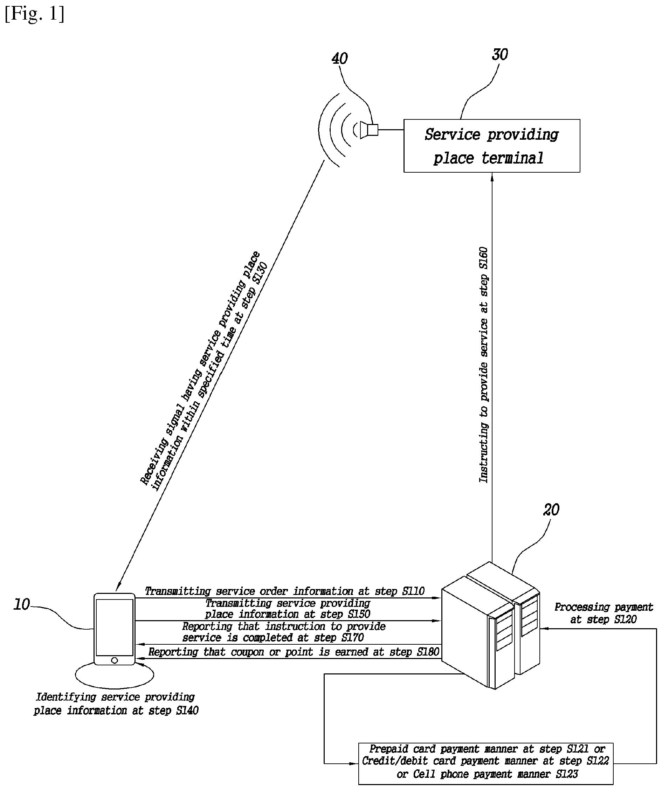

FIG. 1 is a configuration diagram illustrating a service providing place information based service providing method where service order information is received, and then service providing place information is received according to an embodiment of the present invention.

Referring to FIG. 1, the service providing place information based service providing method is as follows.

When the user inputs the service order information using the mobile terminal 10 provided with the application installed therein before visiting the service providing place, the service order information is transmitted from the mobile terminal 10 to the service server 20 at step S110 and payment is processed in the service server 20 by the service order information at step S120. As the payment manner, the prepaid card payment manner at step S121, the credit/debit card payment manner at step S122, or the cell phone payment manner S123 is possible. Also, the customer can pay by the coupon or point earned from payment described below. Payment by gift certificate, account transfer, deposit without a bankbook, and a smart card are also possible.

In the prepaid card payment manner at step S121, the user pays for a prepaid card in advance online or offline. Card information, etc. of the prepaid card is entered into the application of the mobile terminal for registration. Thus, the prepaid card is also registered in the service server 20. When the service order information is transmitted to the service server 20 at step S110, money is deducted according to the service order information. The service server 20 transmits information on the deducted money and the balance to the mobile terminal 10, whereby payment in the prepaid card payment manner S121 is processed.

In the credit/debit card payment manner S122, when the service order information is transmitted from the mobile terminal 10 of the user to the service server 20 at step S110, the service server 20 requests credit/debit card information from the user through the mobile terminal 10 and verifies the credit/debit card information to the credit/debit card company server. The credit/debit card information may include a resident registration number, a cell phone number, a credit/debit card number, a credit/debit card password, credit/debit card expiration date, a card security code (CSC), a card verification value (CW), a card verification code (CVC), an Internet secure payment (ISP) password, a secure click password, a cell phone authentication number, etc.

In the cell phone payment manner S123, when the service order information is transmitted from the mobile terminal 10 of the user to the service server 20 at step S110, the service server 20 requests user information from the user through the mobile terminal 10 and verifies the user information to the mobile communications company server. The user information may include a resident registration number, a cell phone number, a cell phone authentication number, an Internet secure payment (ISP) password, a secure click password, etc.

When one of the various payment manners is used in processing payment, the service server 20 may verify through the mobile terminal 10 whether payment has been processed before payment. When payment has been processed, the service server 20 may report through the mobile terminal that payment is completed.

Despite the processed payment at step S120, when the user carrying the mobile terminal 10 capable of receiving the signal having the service providing place information does not enter the service providing place within the specified time, the service server 20 cancels the service order information and payment. The service server 20 may report cancellation to the mobile terminal 10. That is, payment is canceled when the mobile terminal 10 fails to receive the signal having the service providing place information within the specified time such that the service server 20 fails to receive the service providing place information from the mobile terminal 10 at step S150. The specified time may be changed by the user or the service server 20, and is preferably 24 hours in general.

After payment is processed at step S120, when the user carrying the mobile terminal 10 capable of receiving the signal having the service providing place information enters the service providing place within the specified time, the mobile terminal 10 receives the signal having the service providing place information at step S130 and the service providing place information is identified through the mobile terminal 10 at step S140. The service providing place information is identified at step S140 so as to verify whether the user enters the service providing place to receive the service or enters the service providing place by chance.

The service providing place information is identified by the user S140, and then the mobile terminal 10 transmits the service providing place information to the service server 20 at step S150.

The service server 20 transmits the service order information to the service providing place terminal 30 installed at the service providing place according to the service providing place information, whereby the service server instructs to provide the service at step S160.

After the instruction to provide the service at step S160, the service server 20 reports to the mobile terminal 10 that the instruction to provide the service is completed at step S170. The user recognizes that the instruction to provide the service is completed at step S170 through the mobile terminal 10, and waits for the service to be provided while sitting. By the instruction to provide the service at step S160, the user receives the service according to the service order information at the service providing place according to the service providing place information.

The service server 20 earns a coupon or a point corresponding to payment for the service, and may report to the mobile terminal 10 that the coupon or point is earned at step S180. When the coupon or the point earned in the service server 20 satisfies a condition, the service server 20 transmits a benefit in consequence of satisfying the condition to the mobile terminal 10. The user verifies and enjoys the benefit. The earned coupon or point may be used in the future payment.

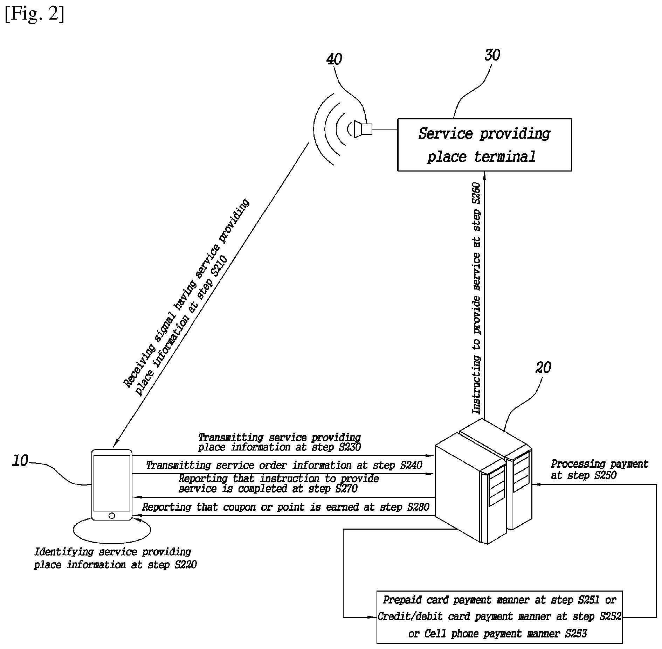

FIG. 2 is a configuration diagram illustrating a service providing place information based service providing method where service providing place information is received, and then service order information is received according to an embodiment of the present invention.

Referring to FIG. 2, the service providing place information based service providing method is as follows.

When the user carrying the mobile terminal 10 capable of receiving the signal having the service providing place information enters the service providing place, the mobile terminal 10 receives the signal having the service providing place information at step S210 and the service providing place information is identified through the mobile terminal 10 at step S220. The service providing place information is identified at step S220 so as to verify whether user enters the service providing place to receive the service or enters the service providing place by chance.

The service providing place information is identified by the user S220, and then the mobile terminal 10 transmits the service providing place information to the service server 20 at step S230.

After the user visits the service providing place, when the user inputs the service order information using the mobile terminal 10 provided with the application installed therein, the service order information is transmitted from the mobile terminal 10 to the service server 20 at step S240 and payment is processed in the service server 20 by the service order information at step S250. As the payment manner, the prepaid card payment manner at step S251, the credit/debit card payment manner at step S252, or the cell phone payment manner at step S253 is possible. Also, the customer can pay by the coupon or point earned from payment described below. Payment by gift certificate, account transfer, deposit without a bankbook, and a smart card are also possible.

In the prepaid card payment manner at step S251, the user pays for a prepaid card in advance online or offline. Card information, etc. of the prepaid card is entered into the application of the mobile terminal. Thus, the prepaid card is also registered in the service server 20. When the service order information is transmitted to the service server 20 at step S240, money is detected according to the service order information. The service server 20 transmits information on the deducted money and the balance to the mobile terminal 10, whereby payment in the prepaid card payment manner S251 is processed.

In the credit/debit card payment manner S252, when the service order information is transmitted from the mobile terminal 10 of the user to the service server 20 at step S240, the service server 20 requests credit/debit card information from the user through the mobile terminal 10 and verifies the credit/debit card information to the credit/debit card company server. The credit/debit card information may include a resident registration number, a cell phone number, a credit/debit card number, a credit/debit card password, credit/debit card expiration date, a card security code (CSC), a card verification value (CW), a card verification code (CVC), an Internet secure payment (ISP) password, a secure click password, a cell phone authentication number, etc.

In the cell phone payment manner S253, when the service order information is transmitted from the mobile terminal 10 of the user to the service server 20 at step S240, the service server 20 requests user information from the user through the mobile terminal 10 and verifies the user information to the mobile communications company server. The user information may include a resident registration number, a cell phone number, a cell phone authentication number, an Internet secure payment (ISP) password, a secure click password, etc.

When one of the various payment manners is used in processing payment, the service server 20 may verify through the mobile terminal 10 whether payment has been processed before payment. When payment has been processed, the service server 20 may report through the mobile terminal that payment is completed.

The service server 20 transmits the service order information to the service providing place terminal 30 installed at the service providing place according to the service providing place information, whereby the service server instructs to provide the service at step S260.

After the instruction to provide the service at step S260, the service server 20 reports to the mobile terminal 10 that the instruction to provide the service is completed at step S270. The user recognizes that the instruction to provide the service is completed at step S270 through the mobile terminal 10, and waits for the service to be provided while sitting. By the instruction to provide the service at step S260, the user receives the service according to the service order information at the service providing place according to the service providing place information.

The service server 20 earns a coupon or a point corresponding to payment for the service, and may report to the mobile terminal 10 that the coupon or point is earned at step S280. When the coupon or the point earned in the service server 20 satisfies a condition, the service server 20 transmits benefit in consequence of satisfying the condition to the mobile terminal 10. The user verifies and enjoys the benefit. The earned coupon or point may be used in the future payment.

In the service providing place information based service providing method, reference numerals are defined as follows.
10: a mobile terminal
20: a service server
30: a service providing place terminal
40: a signal generator generating a signal having service providing place information

The service providing place information based service providing method is not limited to the aforementioned particular embodiments, and may be applied to various situations in which service order information and service providing place information are combined, all service providing place information based service providing methods applied to various situations may be included within the sprit and scope of the present invention.

While preferred embodiments of the present invention have been shown and described, the present invention is not limited to the aforementioned particular embodiments, various modifications are possible by those skilled in the art without departing from the sprit and scope of the accompanying claims, and these modifications should not be understood separately from the scope and spirit. Accordingly, the present invention is intended to cover not only the exemplary embodiments, but also various alternatives, modifications, equivalents and other embodiments that may be included within the spirit and scope of the present invention as defined by the appended claims.

## Claims

1. A service providing place information based service providing method, the method comprising:
receiving, by a service server, service order information input from a mobile terminal;
processing, by the service server, payment according to the service order information;
receiving, by the service server, service providing place information from the mobile terminal that has received a signal having the service providing place information within a specified time to identify the service providing place information;
transmitting, by the service server, the service order information to a service providing place terminal and instructing the service providing place terminal to provide relevant service according to the received service order information and the received service providing place information; and
transmitting, by the service server, the service order information to the service providing place terminal and reporting to the mobile terminal that an instruction to provide the relevant service has been conducted.

2. The method of claim 1, wherein the signal having the service providing place information is received using one or two technologies selected from a group of a Bluetooth technology, an ultrasound reception technology, and a high frequency recognition technology.

3. The method of claim 2, wherein the ultrasound reception technology or the high frequency recognition technology receives or recognizes frequencies of ultrasound or high frequency waves and an occurrence number of the ultrasound or the high frequency waves by using an ultrasonic pattern or a high-frequency pattern where occurrence and pause of the ultrasound or the high frequency waves alternate.

4. The method of any one of claims 1 to 3, wherein the payment is processed in one manner selected from a group consisting of a prepaid card payment manner, a credit/debit card payment manner, and a cell phone payment manner.

5. The method of claim 4, further comprising: earning, by the service server, a coupon or a point corresponding to the payment and reporting to the mobile terminal that the coupon or the point is earned.

6. A service providing place information based service providing method, the method comprising:
receiving, by a service server, service providing place information from a mobile terminal that has received a signal having the service providing place information to identify the service providing place information;
receiving, by the service server, service order information input from the mobile terminal;
processing, by the service server, payment according to the service order information;
transmitting, by the service server, the service order information to a service providing place terminal and instructing the service providing place terminal to provide relevant service according to the received service providing place information and the received service order information; and
transmitting, by the service server, the service order information to the service providing place terminal and reporting to the mobile terminal that an instruction to provide the relevant service has been conducted.

7. The method of claim 6, wherein the signal having the service providing place information is received using one or two technologies selected from a group of a Bluetooth technology, an ultrasound reception technology, and a high frequency recognition technology.

8. The method of claim 7, wherein the ultrasound reception technology or the high frequency recognition technology receives or recognizes frequencies of ultrasound or high frequency waves and an occurrence number of the ultrasound or the high frequency waves by using an ultrasonic pattern or a high-frequency pattern where occurrence and pause of the ultrasound or the high frequency waves alternate.

9. The method of any one of claims 6 to 8, wherein the payment is processed in one manner selected from a group consisting of a prepaid card payment manner, a credit/debit card payment manner, and a cell phone payment manner.

10. The method of claim 9, further comprising: earning, by the service server, a coupon or a point corresponding to the payment and reporting to the mobile terminal that the coupon or the point is earned.
